# EUROPÄISCHE PATENTSCHRIFT

(11) **EP 0 390 746 B1**
(45) Veröffentlichungstag und Bekanntmachung des Hinweises auf die Patenterteilung: **21.07.1993**
(21) Anmeldenummer: 90810240.3
(22) Anmeldetag: 26.03.1990
(51) Int. Cl.: F16L 47/06

(54) **Abdichtende und lösbare Verbindung von einem oder mehreren Kunststoffrohren mit einem Anschlussteil**
Demountable sealing connection between one or more plastic pipes and a joining piece
Connexion étanche et démontable entre un ou plusieurs tuyaux en matière plastique et un élément de jonction

(30) Priorität: 31.03.1989 CH 1177/89
(43) Veröffentlichungstag der Anmeldung: 03.10.1990
(73) Patentinhaber: Geberit AG, CH-8645 Jona (CH)
(72) Erfinder: Etter, Bruno, CH-8865 Bilten (CH); Gübeli, Albert, CH-8645 Jona (CH)
(74) Vertreter: Groner, Manfred

(56) Entgegenhaltungen:
- EP-A- 0 091 254
- DE-U- 8 802 872
- GB-A- 1 146 652
- GB-A- 1 394 219
- US-A- 2 871 031

## Beschreibung

Die Erfindung betrifft eine Verbindung nach dem Oberbegriff des unabhängigen Patentanspruchs 1.

Verbindungen dieser Art sind in grosser Anzahl bekannt. Diese sind jedoch meistens sehr aufwendig oder können die für Hausinstallationen erforderliche andauernde und völlige Dichtigkeit nicht gewährleisten.

Eine Verbindung dieser Art ist aus der GB-A-1,146,652 bekannt. Bei dieser ist das angeschlossene Ende des Kunststoffrohres in den Anschlussteil eingeschoben und die Stirnseite ist im Anschlussteil einem in der Leitung fliessenden Medium ausgesetzt. Diese Verbindung eignet sich nicht für Verbundrohre, da an der genannten Stirnseite sämtliche Schichten des Rohres dem Medium ausgesetzt wären.

Der Erfindung liegt die Aufgabe zugrunde, eine Verbindung der angegebenen Gattung zu schaffen, die ohne Werkzeuge und in einfacher Weise herzustellen ist, die sofort dicht ist und die sich auch für Verbundrohre eignet. Die Verbindung soll sich zudem für Leitung für die Hausinstallation eignen. Die Aufgabe ist durch die Verbindung gemäss Anspruch 1 gelöst. Vorteilhafte Weiterbildungen ergeben sich aus den abhängigen Ansprüchen.

Ein Ausführungsbeispiel der Erfindung wird beispielhaft nachfolgend anhand der Zeichnungen näher erläutert. Es zeigen:

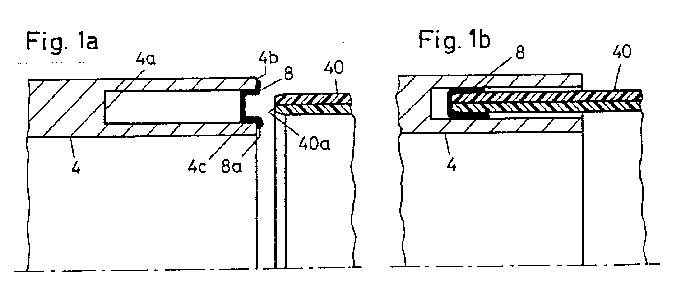

Fig. 1a und 1b Längsschnitte durch Teile der Verbindung vor und nach dem Fügen.

Wie die Fig. 1a und 1b zeigen, weist die Verbindung einen Anschlussteil 4 auf, der aus Metall, beispielsweise aus Messing oder einem geeignetem Kunststoff hergestellt ist. Der Anschlussteil 4 kann für den Anschluss eines Verbundrohres 40, als Verbindungsstück für zwei Rohre 40 oder als Verzweigungsstück ausgebildet sein. Das Rohr 40 weist mehrere Schichten aus Kunststoff auf und ist vergleichsweise starr und kann zwischen den Schichten eine Verstärkung aufweisen. Zur Herstellung der Verbindung wird das Rohr 40 auf den Anschlussteil 4 axial aufgeschoben.

Der Anschlussteil 4 besitzt auf seiner Stirnseite 4b eine umlaufende Ausnehmung 4a, in die wie in Fig. 1a gezeigt vor dem Einschieben des Rohres 40 ein ringförmiges und im querschnitt Ω-förmiger Dichtungsring 8 eingesetzt ist. Dieser Dichtungsring 8 ist ebenfalls aus einem gummielastischem Werkstoff hergestellt. Am radial inneren Rand 4c des Dichtungsringes 8 ist ein aussen an der Fläche 4b anliegender Wulst 8a vorgesehen. Wird nun das Rohr 40 in die Ausnehmung 4a geschoben, so wird der Dichtungsring 8 entsprechend in die Ausnehmung 4a geschoben und die Mündungskante 40a des Rohres in den Ring 8 eingesetzt. Die Flanken des Ringes 8 werden beim Einschieben des Rohres gestreckt und verpresst. Wesentlich ist, das bei dieser Verbindung die Dichtigkeit auch dann gewährleistet ist, wenn das Rohr 40 nicht ganz bis nach hinten in die Ausnehmung 40 eingeschoben ist. Nach entsprechender Dimensionierung des Wulstes 8a kann der Sitz des Rohres 40 in der Ausnehmung 4a und entsprechend auch die Dichtigkeit verändert werden. Wie ersichtlich kann auch diese Verbindung ohne Werkzeuge in einfacher Weise wieder gelöst werden.

Trotz der erheblichen Vorteile der erfindungsgemässen Verbindung ist dieses ersichtlich mit wenigen, einfachen und robusten Bauteilen realisierbar, so dass erfindungsgemäss eine Verbindung geschaffen wurde, welche nicht nur dem sanitären Anforderungen in hervorragender Weise Rechnung trägt, sondern aufgrund ihrer einfachen und robusten Ausführbarkeit kostenmässig günstig und betrieblich äusserst zuverlässig ist. Die Verbindungen können durch einfache Massnahmen, beispielsweise durch Quetschringe auch nicht lösbar gemacht werden.

## Patentansprüche

1. Abdichtende Verbindung von einem oder mehreren Kunststoffrohren (40) mit einem zylindrischen Anschlussteil (4), wobei zwischen dem Anschlussteil (4) und einem Rohrende ein gummielastischer Dichtungsring (8) angeordnet ist, dadurch gekennzeichnet, dass das Anschlussteil (4) wenigstens eine in eine seiner Stirnflächen (4b) eingearbeitete Ausnehmung (4a) aufweist, in die das Rohrende eingreift und die Mündung des Rohrendes von dem im Querschnitt U-förmigen Dichtungsring (8) umgriffen ist und der Dichtungsring (8) so dimensioniert ist, dass er in der Ausnehmung (4a) durch das Anschlussteil (4) radial verpresst ist.

2. Verbindung nach Anspruch 1, dadurch gekennzeichnet, dass der Dichtungsring (8) im entspannten Zustand vorzugsweise am radial innen liegenden Rand (4c) einen umlaufenden Wulst (8a) aufweist.

3. Verbindung nach Anspruch 1 oder 2, dadurch gekennzeichnet, dass das Rohr (40) ein mehrschichtiges und vorzugsweise vergleichsweise starres Verbundrohr ist.

4. Verbindung nach Anspruch 3, dadurch gekennzeichnet, dass das Verbundrohr wenigstens eine Aussenschicht und eine Innenschicht aus Kunststoff aufweist.

5. Verbindung nach einem der Ansprüche 1 bis 4, dadurch gekennzeichnet, dass der Dichtungsring (8) im entspannten Zustand an seinen beiden Rändern jeweils einen umlaufenden und nach aussen ragenden Wulst (8a) aufweist.

6. Verbindung nach Anspruch 5, dadurch gekennzeichnet, dass die Wülste (8a) in der Ausnehmung (4a) gestreckt und verpresst sind.

## Claims

1. Sealing connection of one or more plastic pipes (40) to a cylindrical connection part (4), an elastomeric sealing ring (8) being arranged between the connection part (4) and one pipe end, characterised in that the connection part (4) has at least one recess (4a) made in one of its end faces (4b) into which recess the pipe end engages and the mouth of the pipe end is embraced by the cross-sectionally U-shaped sealing ring (8), and the sealing ring (8) is dimensioned in such a way that, in the recess (4a), it is pressed radially by the connection part (4).

2. Connection according to Claim 1, characterised in that, in the relaxed state, the sealing ring (8) has preferably on the radially inner-lying edge (4c) a peripheral bead (8a).

3. Connection according to Claim 1 or 2, characterised in that the pipe (40) is a multi-layered and preferably comparatively rigid composite pipe.

4. Connection according to Claim 3, characterised in that the composite pipe has at least one outer layer and one inner layer of plastic.

5. Connection according to one of Claims 1 to 4, characterised in that, in the relaxed state, the sealing ring (8) has on both its edges in each case a peripheral and outwardly protruding bead (8a).

6. Connection according to Claim 5, characterised in that the beads (8a) are stretched and pressed in the recess (4a).

## Revendications

1. Connexion étanche entre un ou plusieurs tuyaux en matière plastique (40) et un élément de jonction cylindrique (4), un joint annulaire d'étanchéité (8) ayant l'élasticité du caoutchouc étant disposé entre l'élément de jonction (4) et une extrémité de tuyau, **caractérisée** en ce que l'élément de jonction (4) présente au moins un évidement (4a), pratiqué dans une de ses faces frontales (4b) et dans lequel l'extrémité de tuyau s'engage et l'embouchure de l'extrémité de tuyau est entourée avec serrage par le joint annulaire d'étanchéité (8) présentant une section en forme de U, et le joint annulaire d'étanchéité (8) est dimensionné de telle sorte qu'il est comprimé radialement dans l'évidement (4a) par l'élément de jonction (4).

2. Connexion selon la revendication 1, **caractérisée** en ce que le joint annulaire d'étanchéité (8), à l'état non contraint, présente un bourrelet entourant (8a) de préférence sur le bord (4c) situé radialement à l'intérieur.

3. Connexion selon la revendication 1 ou 2, **caractérisée** en ce que le tuyau (40) est un tuyau composite à plusieurs couches et, de préférence, relativement rigide.

4. Connexion selon la revendication 3, **caractérisée** en ce que le tuyau composite présente au moins une couche extérieure et une couche intérieure de matière plastique.

5. Connexion selon l'une quelconque des revendications 1 à 4, **caractérisée** en ce que le joint annulaire d'étanchéité (8), à l'état non contraint, présente un bourrelet respectif (8a), entourant et dépassant vers l'extérieur, sur chacun de ses deux bords.

6. Connexion selon la revendication 5, **caractérisée** en ce que les bourrelets (8a) sont étirés et comprimés dans l'évidement (4a).
